# EUROPEAN PATENT SPECIFICATION

(11) **EP 0 705 988 B1**
(45) Date of publication and mention of the grant of the patent: **28.04.1999**
(21) Application number: 95306993.7
(22) Date of filing: 03.10.1995
(51) Int. Cl.: F16C 3/06, F16C 3/10

(54) **A method for manufacturing a crankshaft for a combustion engine with several cylinders**
Herstellungsverfahren einer Kurbelwelle für eine Brennkraftmaschine mit mehreren Zylindern
Méthode de fabrication d'un vilebrequin pour une machine à combustion interne à plusieurs cylindres

(30) Priority: 06.10.1994 FI 944675
(43) Date of publication of application: 10.04.1996
(73) Proprietor: Wärtsilä NSD OY AB, 00530 Helsinki (FI)
(72) Inventor: Paro, Daniel, FI-66530 Kvevlax (FI)
(74) Representative: Newby, Martin John

(56) References cited:
- EP-A- 0 315 136
- DE-A- 3 446 262
- US-A- 4 305 311

## Description

The invention relates to a method for manufacturing a crankshaft for a combustion engine with several cylinders, especially for a large diesel engine, the crankshaft including for each cylinder a crank web unit comprising crank webs transverse with regard to the crankshaft and a crank pin connecting the crank webs.

The phrase "large diesel engine" refers here to a diesel engine that may be used for example, for main propulsion or as an auxiliary engine for a ship or for a power plant for production of electricity and/or heat energy.

The crankshaft of a large diesel engine is conventionally entirely machined. It is manufactured by using either mould forging or so called continuing forging, whereby every crank web unit is forged separately to have nearly its final shape. A crankshaft is then assembled from the separate units so that crank web units with their crank pins are secured by a shrinkage fit to main bearing journals of the shaft until the desired crankshaft construction is obtained. A difficulty in this method is to make the crankshaft straight enough, since by using conventional shrinkage fits distortion frequently arises.

It is known from document EP- A- 0 315 136 that a crankshaft can be manufactured by providing crank web units which are integral with hollow crank pin and bearing sections. The crank webs together with their crank pin and bearing sections are installed on a sleeve having a length corresponding to the entire length of the shaft. The crank web units are then fixed simultaneously by expanding and plastically deforming the sleeve. The superfluous portions of the sleeve are then machined away.

Further it is known from DE- A- 3 737 601 to provide hollow shafts with a surrounding bearing sleeve as bearing portion of a crankshaft. The hollow shafts are connected to the crank web units by expanding and plastically deforming the hollow shaft.

One aim of the invention is to obtain an improved method for manufacturing a crankshaft especially for a large diesel engine. A further aim is to eliminate the above mentioned problem appearing in the known technique and to provide a method which is also in other respects technically advantageous and uncomplicated.

The aims of the invention are met in the manner disclosed in Claim 1 and in the other claims. According to the invention separate crank web units are assembled one at a time to a uniform shaft blank corresponding to the entire length of the crankshaft and having different diameters in different regions so that the diameter is at its largest in the central part of the shaft blank and decreases towards each end thereof. First a crank web unit intended for the region of the shaft blank with the largest diameter is installed and fixed in place and after that crank web units intended always in the order of their diameter for the next largest region are installed and fixed to both sides thereof. Subsequently the portions located between the crank webs of each crank web unit at the position of the crank pin are machined away from the shaft blank. A uniform shaft blank ensures better straightness of a crankshaft and, notwithstanding, each crank web unit may easily be located at precisely the right point on the shaft.

The shaft blank comprises advantageously a set of cylindrical portions arranged step-like axially in successive order and to which fixing of the respective crank web unit can take part in a way known per se by using the shrinkage fit technique or the like.

Alternatively, a shaft blank may be manufactured to be slightly frustoconical tapering from its central part towards each end thereof. In this case fixing of the crank web units may be advantageously accomplished by utilising a pressure medium joint known per se.

The diameter of the shaft blank at the position of the main bearings is advantageously machined to its correct dimension since this allows possible rounding of the connection between a crank web and the shaft. Such a rounding improves the strength properties of the construction and is advantageous from the view point of manufacturing technique.

In the following the invention will be described in more detail, by way of example, with reference to the accompanying drawings in which
- Fig.1 shows schematically and partly in section a portion of a shaft blank with a number of crank web units installed thereto,
- Fig.2 shows a corresponding arrangement, in which the shaft blank has been machined to its final shape as a crankshaft, and
- Fig.3 shows a modification of the arrangement shown in Fig.1.

In the drawings, 1 indicates a uniform shaft blank with a number of crank web units 2 installed thereto, one for each cylinder of an engine. Each crank web unit 2 includes two crank webs 2a and a crank pin 2b connecting these together and providing a bearing for a connecting rod (not shown).

According to the invention the diameter of the shaft blank 1 is at its largest in its central part and decreases towards both ends thereof, whereby, first, a crank web unit 2 is correctly installed at the position where the diameter of the shaft blank is at its largest. After this the other crank web units 2 are installed on either side according to decreasing order of diameter of the shaft blank 1.

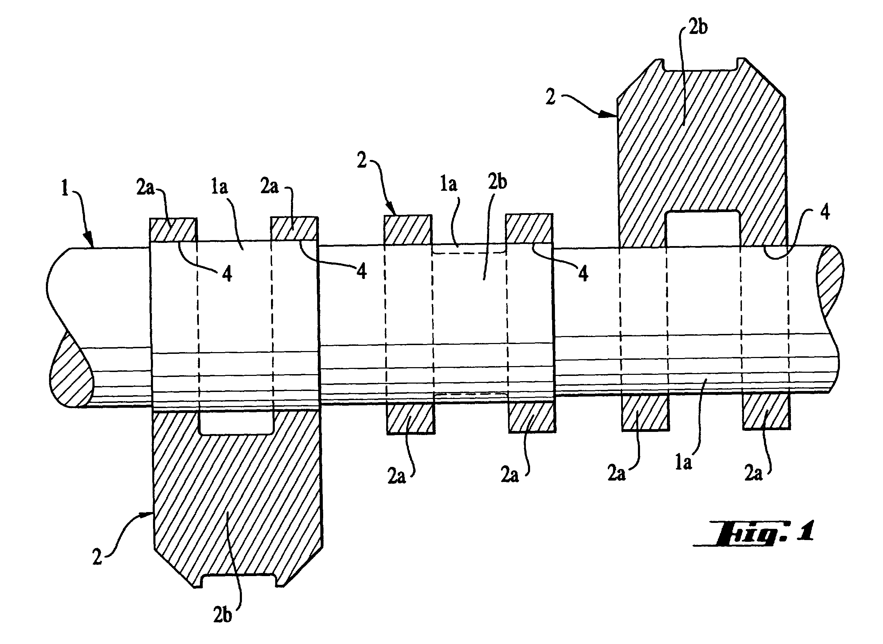

In the embodiment of Fig.1 the shaft blank 1 comprises cylindrical portions step-like arranged axially in successive order and to each of which a crank web unit 2 can be fixed at 4 in a manner known per se by using shrinkage fit or the like. If possible the crank web units 2 should, in the first place, only be heated at the crank webs 2a, so that the temperature of the crank pin 2b and of the portion 1a in the shaft blank 1 between the webs, which is later to be machined away, will not differ much from each other, because otherwise undesirable deflections may result after cooling.

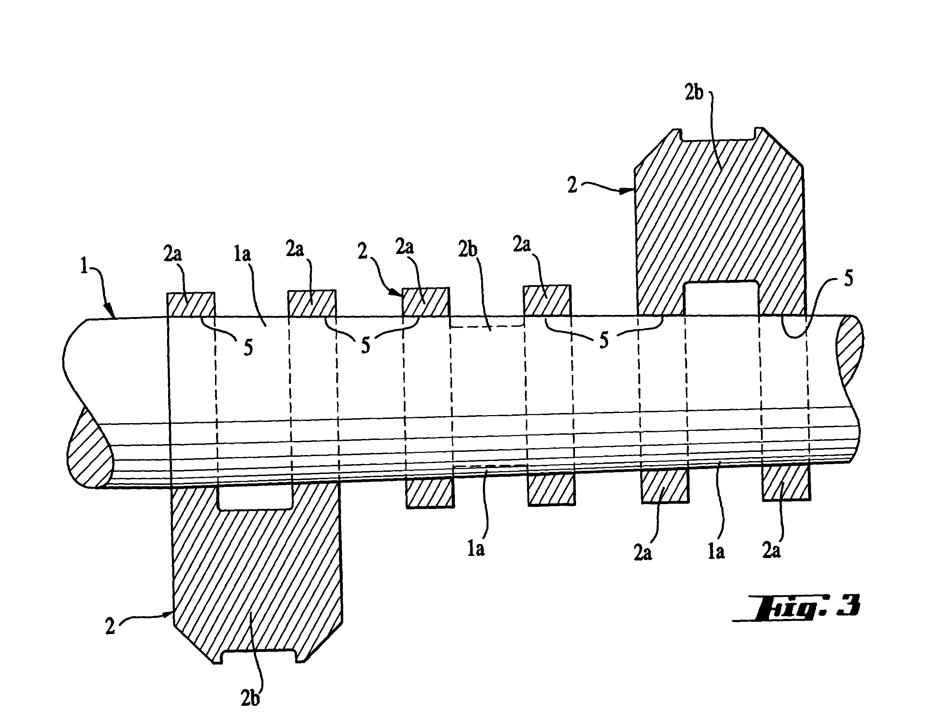

The embodiment of Fig.3 differs from the embodiment of Fig.1 in that in the case of Fig.3, the shaft blank 1 is slightly frustoconical, tapering from its central part towards each end. In this case fixing of crank web units 2 is advantageously carried out by utilising, for example, a pressure medium joint 5, known per se. In this case a sleeve-like distance piece (not shown) may be used as a fitting means in the fixing, the inner surface thereof corresponding to the slightly conical surface of the shaft blank 1 and the outer surface providing a cylindrical surface and, thus, being easily adaptable to the respective crank web unit 2.

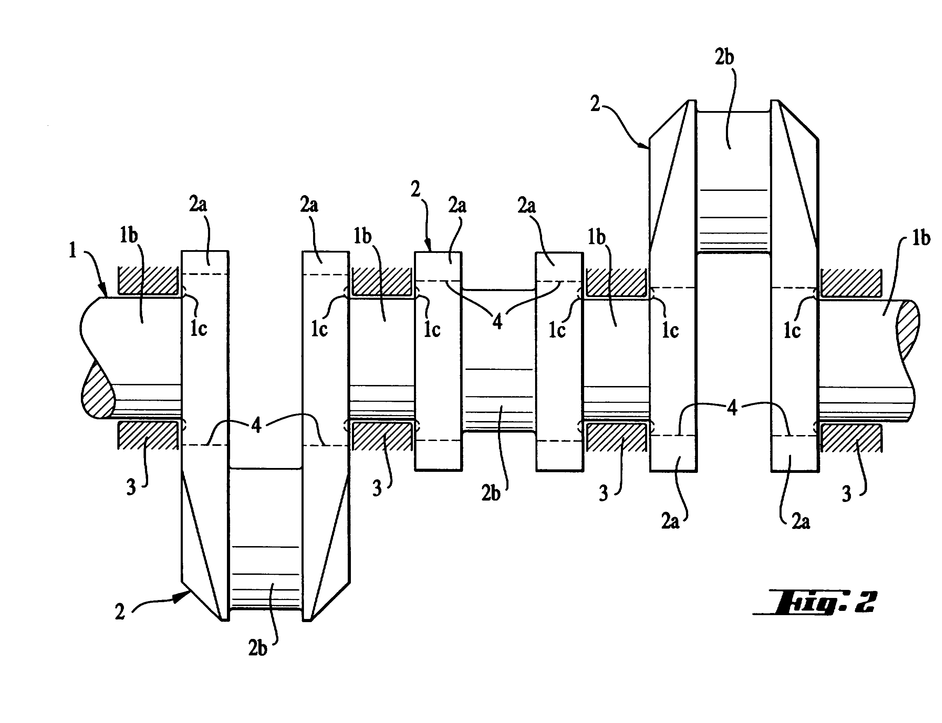

After fixing all the required crank web units 2 to the shaft blank 1, the latter is machined to its correct shape, as shown in Fig.2. The portions 1a of the shaft blank 1 at the position of the crank pins 2b are entirely machined away so as to enable rotation of the connecting rods which will be mounted on the crank pins 2b. Also bearing points 1b are machined to their correct size required by the support structures of the engine block 3. In this case a possible rounding of the edges by a slight undercutting of the crank webs (see 1c) can be used to improve the strength properties of the construction.

The invention is not to be considered as being limited to the embodiments illustrated since several variations thereof are feasible.

## Claims

1. A method for manufacturing a crankshaft (1) for a combustion engine with several cylinders, especially for a large diesel engine, the crankshaft including for each cylinder a crank web unit (2) comprising crank webs (2a) transverse with regard to the crankshaft and a crank pin (2b) connecting the crank webs, whereby separate crank web units (2) are assembled one at a time to a uniform shaft blank corresponding to the entire length of the crankshaft and having a different diameter in different regions so that the diameter is at its largest in the central part of the shaft blank and decreases towards each end thereof, first a crank web unit (2) intended for the region of the shaft blank with the largest diameter is installed and fixed in place and after that crank web units intended always in the order of their diameter for the next largest region are installed and fixed to both sides thereof, and subsequently the portions located between the crank webs (2a) of each crank web unit at the position of the respective crank pin (2b) are machined away from the shaft blank.

2. A method according to Claim 1, characterised in that the shaft blank comprises a set of cylindrical portions arranged step-like axially in successive order and to which fixing of the respective crank web units takes place in a way known per se by using a shrinkage fit or the like.

3. A method according to Claim 1, characterised in that the shaft blank is manufactured to be slightly frustoconical tapering from its central part towards each end thereof.

4. A method according to Claim 3, characterised in that fixing of the crank web units to the shaft blank is accomplished by utilising a pressure medium joint.

5. A method according to any preceding claim, characterised in that the diameter of the shaft blank at the position of the main bearings is secured by machining so that a possible rounding (1c) of the connection of a crank web with the shaft blank may be provided.

## Patentansprüche

1. Verfahren zur Herstellung einer Kurbelwelle (1) für eine Brennkraftmaschine mit mehreren Zylindern, insbesondere für einen großen Dieselmotor, welche Kurbelwelle für jeden Zylinder eine Kurbelarmeinheit (2) aufweist, die bezüglich der Kurbelwelle querlaufende Kurbelarme (2a) und einen die Kurbelarme verbindenden Kurbelzapfen (2b) umfaßt, wobei separate Kurbelarmeinheiten (2) eine nach der anderen auf einen einheitlichen Wellenrohling entsprechend der gesamten Länge der Kurbelwelle montiert werden, der einen unterschiedlichen Durchmesser in verschiedenen Bereichen hat, so daß der Durchmesser in dem Zentralteil des Wellenrohlings am größten ist und er in Richtung seines jeden Endes abnimmt, eine für den Bereich des Wellenrohlings mit dem größten Durchmesser vorgesehene erste Kurbelarmeinheit (2) montiert und befestigt wird und danach immer in der Reihenfolge ihres Durchmessers für die nächst große Stelle vorgesehene Kurbelarmeinheiten auf beiden Seiten davon montiert und befestigt werden, und nachfolgend die Abschnitte zwischen den Kurbelarmen (2a) jeder Kurbelarmeinheit an der Stelle des jeweiligen Kurbelzapfens (2b) maschinell von dem Wellenrohling entfernt werden.

2. Verfahren gemäß Anspruch 1,
dadurch gekennzeichnet, daß der Wellenrohling einen Satz zylindrischer Abschnitte umfaßt, die stufenweise in axialer Richtung aufeinanderfolgend angeordnet sind und auf die die jeweiligen Kurbelarmeinheiten mittels einer an sich bekannten Weise durch Schrumpfpassung oder dergleichen befestigt werden.

3. Verfahren gemäß Anspruch 1,
dadurch gekennzeichnet, daß der Wellenrohling als leicht stumpfkonisch von seinem Zentrum aus in jede Richtung sich verjüngend hergestellt wird.

4. Verfahren gemäß Anspruch 3,
dadurch gekennzeichnet, daß das Befestigen der Kurbelarmeinheiten auf dem Wellenrohling durch Verwenden einer Druckmediumverbindung vollzogen wird.

5. Verfahren gemäß einem der vorangehenden Ansprüche,
dadurch gekennzeichnet, daß der Durchmesser des Wellenrohlings an der Stelle der Hauptlager maschinell sichergestellt wird, so daß eine mögliche Rundung (1c) der Verbindung eines Kurbelwellenarms mit dem Wellenrohling vorgesehen werden kann.

## Revendications

1. Procédé de fabrication d'un vilebrequin (1) pour un moteur à combustion interne ayant plusieurs cylindres, en particulier pour un gros moteur diesel, le vilebrequin comportant, pour chaque cylindre, une unité de flasque de vilebrequin (2) comprenant des flasques de vilebrequin (2a) transversaux par rapport au vilebrequin et un tourillon de vilebrequin (2b) connectant les flasques de vilebrequin, des unités de flasque de vilebrequin (2) sépareés étant ainsi assemblées l'une après l'autre pour former une ébauche d'arbre uniforme correspondant à la longueur totale du vilebrequin et ayant différents diamètres dans différentes régions de sorte que le diamètre soit le plus grand dans la partie centrale de l'ébauche d'arbre et diminue vers chaque extrémité de celle-ci, une unité de flasque de vilebrequin (2) destinée à la région de l'ébauche d'arbre de plus grand diamètre étant d'abord installée et fixée en place, puis des unités de flasque de vilebrequin prévues toujours dans l'ordre de leur diamètre pour la région suivante la plus grande étant installées et fixées des deux côtés de celle-ci, et ensuite les portions situées entre les flasques de vilebrequin (2a) de chaque unité de flasque de vilebrequin au niveau du tourillon de vilebrequin respectif (2b) étant enlevées par usinage de l'ébauche d'arbre.

2. Procédé selon la revendication 1, caractérisé en ce que l'ébauche d'arbre comprend un jeu de portions cylindriques arrangées en échelons axialement en succession et auxquelles la fixation des unités de flasque de vilebrequin respectives s'effectue d'une manière connue en soi en utilisant un ajustement serré par retrait ou similaire.

3. Procédé selon la revendication 1, caractérisé en ce que l'ébauche d'arbre est fabriquée de manière à être légèrement tronconique et à s'effiler depuis sa partie centrale vers chacune de ses extrémités.

4. Procédé selon la revendication 3, caractérisé en ce que la fixation des unités de flasque de vilebrequin à l'ébauche d'arbre est effectuée en utilisant un joint de milieu de pression.

5. Procédé selon l'une quelconque des revendications précédentes, caractérisé en ce que le diamètre de l'ébauche d'arbre au niveau des paliers principaux est fixé par usinage de sorte qu'un arrondissement possible (1c) de la connexion d'un flasque de vilebrequin à l'ébauche d'arbre puisse être prévu.
